# EUROPEAN PATENT APPLICATION

(11) **EP 4 772 307 A1**
(43) Date of publication of application: **08.07.2026**
(21) Application number: 25226165.6
(22) Date of filing: 22.12.2025
(51) Int. Cl.: B24B 9/14, B24B 41/06, F16D 3/20

(54) **LENS CLAMPING DEVICE**

(30) Priority: 03.01.2025 KR 20250000686
(71) Applicant: Huvitz Co., Ltd., Anyang-si, Gyeonggi-do 14055 (KR)
(72) Inventor: OH, Dong Kun, 14055 Anyang-si (KR)
(74) Representative: Henkel & Partner mbB

(57) **Abstract**

Disclosed is a lens clamping device capable of clamping a lens more stably because an angle for clamping the lens can be adjusted corresponding to an inclined surface of the lens. The lens clamping device includes: a clamp shaft mounted on a lens processing machine and configured to move in up-down, left-right, and front-rear directions and rotate in an axial direction; a clamp head contacting a surface of a lens to support the lens; and a connector connecting the clamp head and the clamp shaft such that the clamp head and the clamp shaft rotate together, and the clamp head is configured to be capable of articular rotation based on a hinge point .

## Description

### CROSS-REFERENCE TO RELATED APPLICATION

This application claims benefit of priority to Korean Patent Application No. 10-2025-0000686 filed on January 03, 2025, the entire contents of which are incorporated herein by reference.

### FIELD OF THE INVENTION

The present invention relates to a lens clamping device, and more particularly, to a lens clamping device capable of clamping a lens more stably because the angle for clamping the lens can be adjusted corresponding to the inclined surface of the lens.

### BACKGROUND

Generally, in order to manufacture a spectacle lens, a commercially available circular lens (commonly referred to as a blank lens) must be processed into the shape of a target spectacle lens, for example, the shape of a spectacle frame.

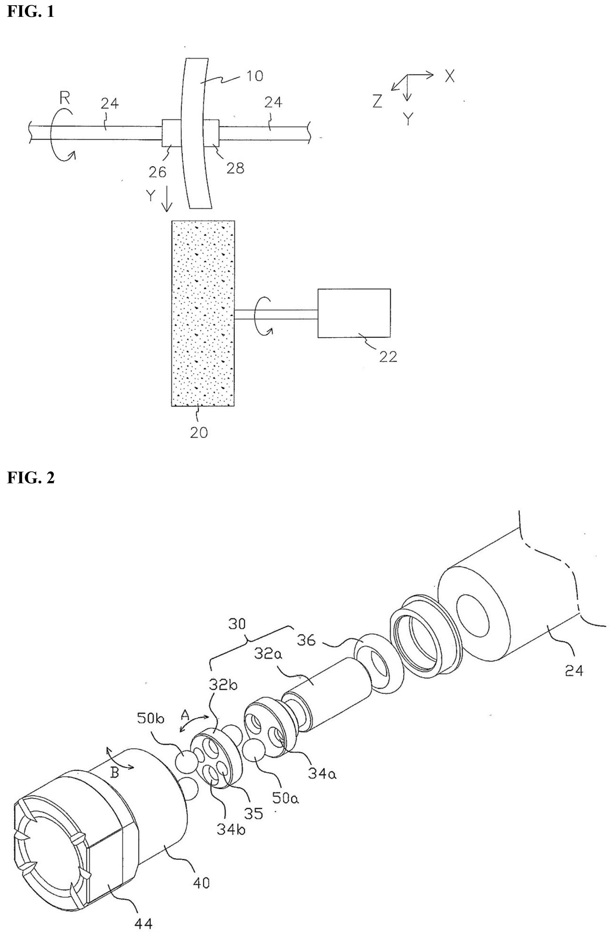

FIG. 1 is a view for explaining a process of processing a circular lens into a spectacle lens shape using a grinder. As shown in FIG. 1, a lens processing machine (lens edger) is provided with a grinder 20 rotated by a motor 22, and a circular lens 10 fixed by a pair of clamp shafts 24 is positioned to face the grinder 20. The clamp shafts 24 serve as rotation and movement axes that rotate the lens 10 (R direction) or move it (Y direction).

The lens processing machine moves the clamp shafts 24 a predetermined distance in the direction of the grinder 20 (for example, Y direction in FIG. 1) so that the rotating grinder 20 and the lens 10 come into contact, thereby grinding (abrading) the portion of the lens 10 in contact with the grinder 20. While grinding the lens 10 in this manner, the clamp shafts 24 are rotated (R direction) to rotate the lens 10 one revolution, and then the grinding process is performed on the entire circumference of the lens 10, processing the lens 10 into a desired shape.

Clamps 26 and 28 for firmly fixing the lens 10 are mounted on the free ends of the clamp shafts 24, that is, the ends where the lens 10 is fixed. The clamps 26 and 28 have contact surfaces attached to the front surface (left surface of the lens in FIG. 1) and the rear surface (right surface of the lens in FIG. 1) of the lens 10, respectively, and support the front and rear surfaces of the lens 10 through the contact surfaces to clamp the lens 10, thereby preventing the lens 10 from separating from the clamp shafts 24.

Generally, since the front surface of the lens 10 consists of a relatively flat surface, the clamp 26 mounted on the front surface of the lens consists of a single member having a flat contact surface. On the other hand, since the rear surface of the lens 10 consists of a curved surface and the curvature or inclination varies depending on the position, the clamp 28 mounted on the rear surface of the lens consists of a clamp head whose position or shape changes corresponding to the curved surface or inclination of the lens, and a coupling part for fixing the clamp head to the clamp shaft 24.

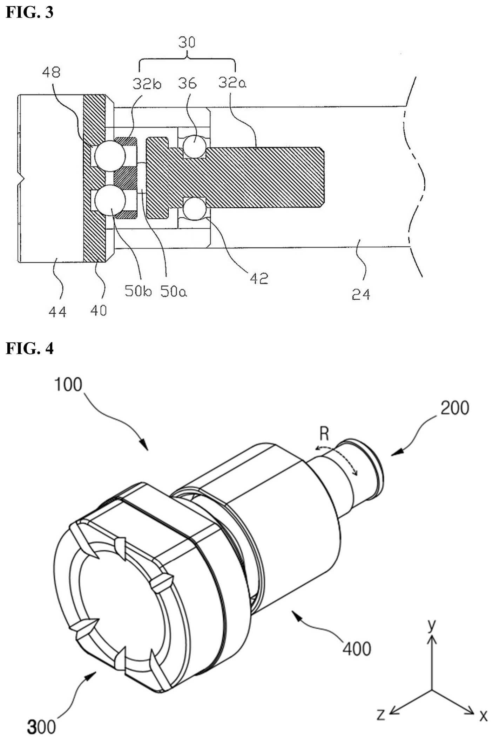

FIGS. 2 and 3 are an exploded perspective view and a cross-sectional view of a conventional lens clamping device, respectively (see Korean Patent Publication No. 10-2017-0057608). As shown in FIGS. 2 and 3, the conventional lens clamping device clamps a lens using a pivot rotation method, wherein a coupling part 30 couples a clamp head 40 to the clamp shaft 24 so as to be pivotably rotatable. An elastic pad 44 made of rubber or the like is attached to one end of the clamp head 40 to increase frictional force with the lens 10 and stably support the lens 10.

In the coupling part 30, a pair of horizontal rotation ball fixing grooves 34a are formed at one end of a coupling part body 32a to accommodate a pair of horizontal rotation balls 50a, and a pair of fixing grooves 35 are also formed in a horizontal direction in a vertical coupling part 32b. The pair of horizontal rotation balls 50a are fitted between the coupling part body 32a and the vertical coupling part 32b, so that the coupling part body 32a and the vertical coupling part 32b are connected to be rotatable in the front-rear direction (arrow A in FIG. 2). In addition, a pair of vertical rotation ball fixing grooves 34b are formed in the vertical coupling part 32b to accommodate a pair of vertical rotation balls 50b, and a pair of vertical rotation ball fixing grooves (not shown) are also formed in the clamp head 40. The pair of vertical rotation balls 50b are fitted between the vertical coupling part 32b and the clamp head 40, so that the vertical coupling part 32b and the clamp head 40 are connected to be rotatable in the left-right direction (arrow B in FIG. 2).

Due to the horizontal rotation balls 50a and the vertical rotation balls 50b, gaps are spaced between the coupling part body 32a and the vertical coupling part 32b, and between the vertical coupling part 32b and the clamp head 40. Therefore, the hinge point at which the clamp head 40 rotates up and down is different from the hinge point at which it rotates left and right, which may cause errors. Accordingly, there is a demand for a lens clamping device capable of preventing errors from occurring when the clamp head 40 rotates in the front-rear and left-right directions, thereby improving operation and work efficiency.

### [Prior Art Document]

(Patent Document 1) Korean Patent Publication No. 10-2017-0057608

### SUMMARY OF THE INVENTION

### TECHNICAL OBJECTS

An object of the present invention is to provide a lens clamping device in which a clamping angle is adjusted corresponding to an inclined surface of a lens, and which can clamp the lens more stably.

### TECHNICAL SOLUTION

To achieve the above object, a lens clamping device according to the present invention comprises: a clamp shaft mounted on a lens processing machine and configured to move in up-down, left-right, and front-rear directions and rotate in an axial direction; a clamp head contacting a surface of a lens to support the lens; and a connector connecting the clamp head and the clamp shaft such that the clamp head and the clamp shaft rotate together, and the clamp head is configured to be capable of articular rotation based on a hinge point.

Preferably, the clamp head includes: a clamp pad made of an elastic material, contacting a surface of a lens to be processed to support the lens; and a clamp head frame having the clamp pad mounted on one end and a hemispherical rotational opening formed on the other end.

Preferably, the connector includes: a shaft block fixedly coupled to one end of the clamp shaft and having a joint fixing hole formed therein; a clamp chuck joint having one end inserted into and fixed to the joint fixing hole of the shaft block, and the other end formed with a rotational ball accommodatingly rotatably in the rotational opening of the clamp head frame; and a clamp chuck retainer fixed to the other end of the clamp head frame to prevent the rotational ball accommodated in the rotational opening from separating from the rotational opening .

Preferably, a left-right length (L1) and an up-down length (L2) of the rotational ball in a direction orthogonal to the axial direction of the clamp shaft are different from each other, and the rotational opening has a left-right length (L1) and an up-down length (L2) corresponding to the rotational ball.

More preferably, the rotational ball has a hexahedral shape, wherein a curvature (R1) of an upper surface of the rotational ball in a rotation direction of the clamp shaft is different from a curvature (R2) of a side surface of the rotational ball in the rotation direction of the clamp shaft, and curvatures (r1, r2) of an upper surface and a side surface of the rotational opening in the rotation direction of the clamp shaft correspond to the curvatures (R1, R2) of the upper surface and the side surface of the rotational ball in the rotation direction of the clamp shaft, respectively.

Preferably, a curvature (r3) of the rotational opening in the axial direction of the clamp shaft is greater than a curvature (R3) of the rotational ball in the axial direction of the clamp shaft.

Preferably, the device further comprises a gap maintaining unit mounted between the shaft block and the clamp head frame and formed to have elasticity to maintain a gap between the shaft block and the clamp head frame.

Preferably, the gap maintaining unit includes: a gap maintaining base fitted into and fixed to a pressing groove of the shaft block; and a gap maintaining elastic part elastically supporting the clamp head frame.

### EFFECTS OF THE DISCLOSURE

According to the lens clamping device according to the present invention, the clamping angle is adjusted corresponding to the inclined surface of the lens, and the lens can be clamped more stably.

### BRIEF DESCRIPTION OF THE DRAWINGS

FIG. 1 is a view for explaining a process of processing a circular lens into a spectacle lens shape using a grinder.
FIGS. 2 and 3 are an exploded perspective view and a cross-sectional view of a conventional lens clamping device, respectively.
FIG. 4 is an external perspective view of a lens clamping device according to an embodiment of the present invention.
FIG. 5 is a view showing a usage state of the lens clamping device according to an embodiment of the present invention.
FIG. 6 is an exploded perspective view of the lens clamping device according to an embodiment of the present invention.
FIG. 7 is a view showing a cross-section of the lens clamping device according to an embodiment of the present invention.

### DETAILED DESCRIPTION OF THE PREFERRED EMBODIMENTS

Hereinafter, the present invention will be described in detail with reference to the accompanying drawings. In the detailed description of the present invention, the terms such as up and down, left and right, front and back, horizontal, and vertical are used to indicate the relative positional relationships between components.

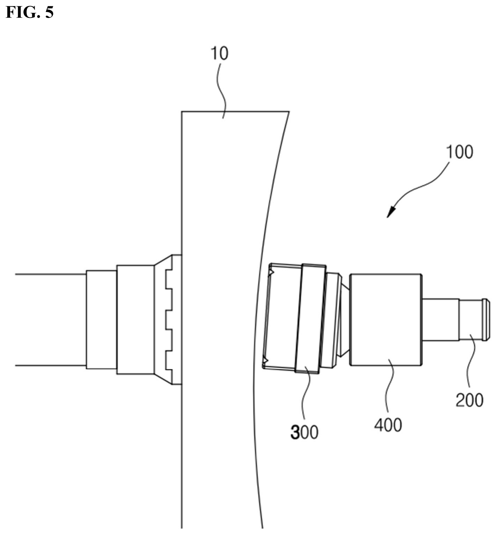

FIG. 4 is an external perspective view of a lens clamping device according to an embodiment of the present invention, and FIG. 5 is a view showing a usage state of the lens clamping device according to an embodiment of the present invention.

As shown in FIGS. 4 and 5, a lens clamping device 100 according to the present invention includes a clamp shaft 200, a clamp head 300, and a connector 400.

The clamp shaft 200 is a conventional clamp shaft that is mounted on a lens processing machine and moved in up-down, left-right, and front-rear directions (y-direction, x-direction, z-direction, respectively) and rotated in an axial direction (R direction). The clamp head 300 contacts a surface of a lens 10 to support the lens 10.

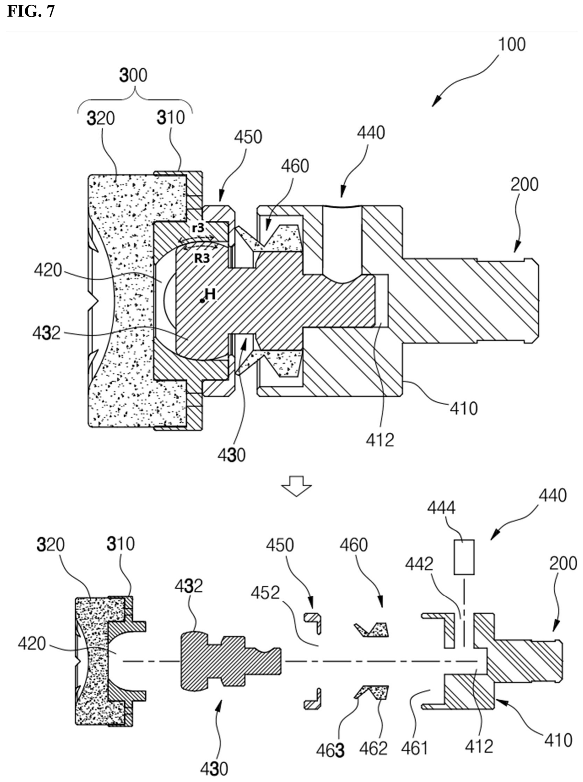

The connector 400 connects the clamp head 300 and the clamp shaft 200 so that the clamp head 300 and the clamp shaft 200 rotate together (along R direction), and the clamp head 300 is capable of articular rotation based on a hinge point (H, see FIG. 7). According to the present invention, the clamp head 300 and the clamp shaft 200 are rotated together along R direction, that is, identically. In other words, the clamp head 300 does not rotate slower or faster than the clamp shaft 200 in the circumferential direction (R direction) of the clamp shaft 200.

As shown in FIG. 5, the lens clamping device 100 according to the present invention supports the lens 10 corresponding to the shape of the rear surface of the lens 10 in a state where the front surface of the lens 10 is fixed, and can clamp the lens 10 more stably corresponding to the inclination of the rear surface of the lens 10. That is, according to the present invention, the connector 400 connects the clamp head 300 to the clamp shaft 200 so as to be capable of articular rotation based on the hinge point (H). Therefore, the supporting angle of the clamp head 300 can be adjusted corresponding to the inclined surface of the lens 10, and the lens 10 can be clamped more stably.

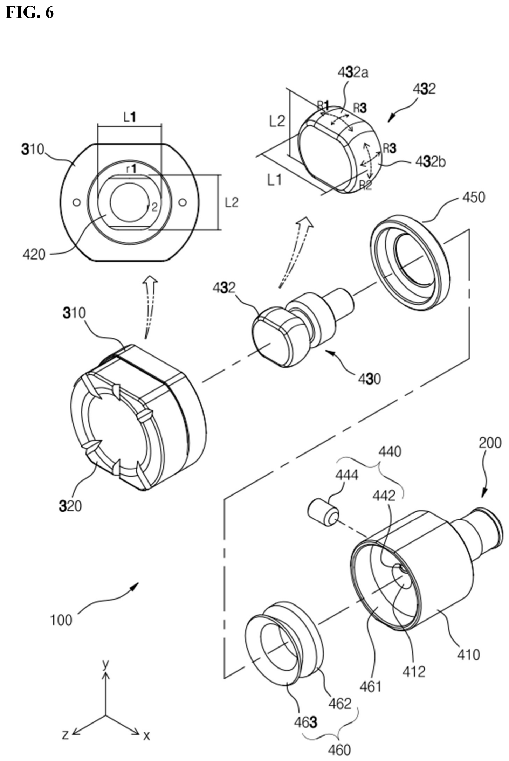

FIG. 6 is an exploded perspective view of the lens clamping device according to an embodiment of the present invention, and FIG. 7 is a view showing a cross-section of the lens clamping device according to an embodiment of the present invention.

As shown in FIGS. 6 and 7, the clamp head 300 includes a clamp head frame 310 and a clamp pad 320. The clamp pad 320 is made of an elastic material and contacts the surface of the lens 10 to be processed to firmly support the lens 10. For example, the clamp pad 320 may be made of Ethylene-Propylene Diene Monomer (EPDM) rubber having a hardness of 80. The clamp head frame 310 has the clamp pad 320 mounted on one end, and a hemispherical rotational opening 420 is formed on the other end.

The connector 400 may include a shaft block 410, a clamp chuck joint 430, a shaft fixing part 440, a clamp chuck retainer 450, a gap maintaining unit 460, and the like.

The shaft block 410 is fixedly coupled to one end of the clamp shaft 200, and a joint fixing hole 412 is formed therein. One end of the clamp chuck joint 430 is inserted into and fixed to the joint fixing hole 412 of the shaft block 410. A rotational ball 432 that is accommodated to be rotatable in the rotational opening 420 of the clamp head frame 310 is formed at the other end of the clamp chuck joint 430. If necessary, the shaft fixing part 440 fixes the one end of the clamp chuck joint 430 inserted into the joint fixing hole 412 to the shaft block 410.

The clamp chuck retainer 450 is fixed to the other end of the clamp head frame 310 to prevent the rotational ball 432 accommodated in the rotational opening 420 from separating from the rotational opening 420. The clamp chuck retainer 450 and the other end of the clamp head frame 310 may be coupled by a method such as interference fit or screw coupling. A seating hole 452 is formed inside the clamp chuck retainer 450, through which the other end of the clamp chuck joint 430 passes but the rotational ball 432 cannot pass.

As shown in FIG. 6, a left-right length (L1) and an up-down length (L2) of the rotational ball 432 in directions orthogonal to the axial direction of the clamp shaft 200 are different from each other, and the rotational opening 420 has a left-right length (L1) and an up-down length (L2) corresponding to those of the rotational ball 432. Since the left-right length (L1) and the up-down length (L2) of the rotational ball 432 and the rotational opening 420 are different from each other, the rotational ball 432 is prevented from rotating in the rotation direction (R direction) of the clamp shaft 200 within the rotational opening 420. Therefore, the clamp head 300 and the clamp shaft 200 rotate together at the same speed. That is, the rotational ball 432 is prevented from idling in the rotation direction of the clamp shaft 200 within the rotational opening 420.

In a preferred embodiment of the present invention, the rotational ball 432 has a hexahedral shape, and a curvature (R1) of an upper surface 432a of the rotational ball 432 in the rotation direction of the clamp shaft 200 is different from a curvature (R2) of a side surface 432b of the rotational ball 432 in the rotation direction of the clamp shaft 200. In addition, curvatures (r1, r2) of an upper surface and a side surface of the rotational opening 420 in the rotation direction of the clamp shaft 200 correspond to the curvatures (R1, R2) of the upper surface and the side surface of the rotational ball 432 in the rotation direction of the clamp shaft 200, respectively. For example, the curvature (R1) of the upper surface 432a of the rotational ball 432 in the rotation direction of the clamp shaft 200 has the curvature of an ellipse, and the curvature (R2) of the side surface 432b of the rotational ball 432 in the rotation direction of the clamp shaft 200 has the curvature of a circle.

Specifically, the curvature (R1) of the upper surface 432a of the rotational ball 432 in the rotation direction of the clamp shaft 200 corresponds to, that is, is substantially the same as, the curvature (r1) of the upper surface of the rotational opening 420 in the rotation direction of the clamp shaft 200. And the curvature (R2) of the side surface 432b of the rotational ball 432 in the rotation direction of the clamp shaft 200 corresponds to, that is, is substantially the same as, the curvature (r2) of the side surface of the rotational opening 420 in the rotation direction of the clamp shaft 200.

As described above, since the curvature (R1) of the upper surface 432a of the rotational ball 432 and the curvature (R2) of the side surface 432b of the rotational ball 432 are different from each other, and the curvature (r1) of the upper surface of the rotational opening 420 and the curvature (r2) of the side surface of the rotational opening 420 are different from each other, the rotational ball 432 is prevented from rotating in the rotation direction (R direction) of the clamp shaft 200 within the rotational opening 420, and the clamp head 300 and the clamp shaft 200 rotate together at the same speed. Therefore, the rotational ball 432 is prevented from idling in the rotation direction of the clamp shaft 200 within the rotational opening 420. That is, the clamp head 300 and the clamp shaft 200 rotate together at the same speed, and the relative positions of the clamp shaft 200 and the clamp head 300 are prevented from changing.

As shown in FIGS. 6 and 7, a curvature (r3) of the rotational opening 420 in the axial direction (z direction) of the clamp shaft 200 is greater than a curvature (R3) of the rotational ball 432 in the axial direction of the clamp shaft 200. Therefore, the rotational opening 420, that is, the clamp head 300, can rotate in the axial direction of the clamp shaft 200 centering on the rotational ball 432, preferably based on the center point of the rotational ball 432, i.e., the hinge point (H). Therefore, when the clamp head 300 comes into contact with the inclined surface of the lens 10, the clamp head 300 can rotate in the axial direction of the clamp shaft 200 (in the direction of arrows R3, r3 in FIGS. 6 and 7) around the rotational ball 432 corresponding to the contacted inclined surface of the lens 10.

The rotational ball 432 accommodated in the rotational opening 420 is prevented from separating by the clamp chuck retainer 450 coupled to the clamp head frame 310. The seating hole 452 of the clamp chuck retainer 450 has the same center point as the hemispherical shape of the rotational opening 420 and has a diameter such that the rotational ball 432 does not passe.

The clamp chuck joint 430 may be fixed to the shaft block 410 by a conventional method. In an embodiment of the present invention, the clamp chuck joint 430 is fixed to the shaft block 410 by the shaft fixing part 440. The shaft fixing part 440 includes a shaft fixing bolt 444 fastened to a shaft fixing hole 442. One or more shaft fixing holes 442 may be formed in the shaft block 410 in a direction orthogonal to the joint fixing hole 412. The shaft fixing bolt 444 is fastened to the shaft fixing hole 442 to press and fix the one end of the clamp chuck joint 430 inserted into the joint fixing hole 412.

The gap maintaining unit 460 is mounted between the shaft block 410 and the clamp head frame 310 and is formed to have elasticity to maintain the gap between the shaft block 410 and the clamp head frame 310. If necessary, the gap maintaining unit 460 has a ring shape, and the clamp chuck joint 430 may be installed passing through the inner hole of the ringshaped gap maintaining unit 460. In addition, the gap maintaining unit 460 may prevent foreign substances from entering the inside of the connector 400.

As shown in FIGS. 6 and 7, the gap maintaining unit 460 includes a gap maintaining base 462 fitted into and fixed to a pressing groove 461 of the shaft block 410, and a gap maintaining elastic part 463 elastically supporting the clamp head frame 310. The gap maintaining base 462 has a predetermined thickness in the longitudinal direction and is fitted into and fixed to the pressing groove 461 to be fixedly mounted on the shaft block 410. The pressing groove 461 may be formed in the shaft block 410 with a larger diameter than the joint fixing hole 412.

The gap maintaining elastic part 463 is formed on the gap maintaining base 462 and is formed in a tapered shape whose diameter gradually increases in the direction of the clamp chuck retainer 450, so that it can elastically press the clamp chuck retainer 450 and the clamp head 300. When the clamp head 300 supports the inclined surface of the lens 10 and the clamp head 300 tilts in the inclined direction, the gap maintaining unit 460, specifically, the gap maintaining elastic part 463, is pressed and deformed in the inclined direction of the clamp head 300 corresponding to the tilting of the clamp head 300. At this time, the restoring force in the corresponding direction increases due to the deformation of the gap maintaining elastic part 463.

On the other hand, when the clamp head 300 does not support the lens 10 and is in a free state, the gap maintaining unit 460 returns to its original shape by the elasticity of the gap maintaining unit 460, specifically the gap maintaining elastic part 463, and supports the clamp head 300 uniformly, that is, supports the clamp head 300 in a non-tilted state. Describing this in detail, when the clamp head 300 comes into contact with the inclined surface of the lens 10, the clamp head 300 rotates by a predetermined angle and tilts so as to be in close contact with the inclined surface. At this time, the gap maintaining unit 460 located in the direction in which the clamp head 300 is tilted is compressed and deformed, and the tilted state of the clamp head 300 is maintained by the force applied to the clamp head 300 from the lens 10 and the restoring force of the gap maintaining unit 460. After the lens processing operation, when the lens 10 is removed, the gap maintaining unit 460 returns to its original shape by elasticity, and the gap between the shaft block 410 and the clamp head frame 310 is maintained constant.

According to the present invention, since the hinge point (H) at which the clamp head 300 rotates, that is, the rotation center point of the clamp head 300, specifically, the center point of the rotational ball 432 is inside the clamp head frame 310, the articular rotation angle (tilting angle) of the clamp head 300 can be formed larger than in the prior art, thereby increasing the rotation angle of the clamp head 300. For example, in the present invention, the hinge point (H) of the clamp head 300 is formed approximately 1.9 mm closer to the clamp head 300 direction than the rotation center point disclosed in Korean Patent Publication No. 10-2017-0057608, so that it can easily respond to a lens surface with a steep inclination. That is, in the present invention, the tilting angle of the clamp head 300 is about 20 to 28°, and can tilt at an average of 24°, which is about 1.5 to 2.5 times larger than the tilting angle of the prior art.

Although the present invention has been described with reference to the accompanying drawings and exemplary embodiments, the present invention is not limited to the contents shown in the drawings and the above-described embodiments. For the purpose of understanding, reference numerals are indicated in the following claims, but the scope of the following claims is not limited to the reference numerals and the contents shown in the drawings, and should be interpreted to encompass all modifications, equivalents, and functions of the exemplary embodiments.

## Claims

1. A lens clamping device comprising:
a clamp shaft (200) mounted on a lens processing machine and configured to move in up-down, left-right, and front-rear directions and rotate in an axial direction;
a clamp head (300) contacting a surface of a lens (10) to support the lens (10); and
a connector (400) connecting the clamp head (300) and the clamp shaft (200) such that the clamp head (300) and the clamp shaft (200) rotate together, and the clamp head (300) is configured to be capable of articular rotation based on a hinge point (H) .

2. The lens clamping device of claim 1, wherein the clamp head (300) comprises:
a clamp pad (320) made of an elastic material, contacting a surface of the lens (10) to be processed to support the lens (10); and
a clamp head frame (310) having the clamp pad (320) mounted on one end and a hemispherical rotational opening (420) formed on the other end .

3. The lens clamping device of claim 2, wherein the connector (400) comprises:
a shaft block (410) fixedly coupled to one end of the clamp shaft (200) and having a joint fixing hole (412) formed therein;
a clamp chuck joint (430) having one end inserted into and fixed to the joint fixing hole (412) of the shaft block (410), and the other end formed with a rotational ball (432) accommodatingly rotatably in the rotational opening (420) of the clamp head frame (310); and
a clamp chuck retainer (450) fixed to the other end of the clamp head frame (310) to prevent the rotational ball (432) accommodated in the rotational opening (420) from separating from the rotational opening (420) .

4. The lens clamping device of claim 3, wherein a left-right length (L1) and an up-down length (L2) of the rotational ball (432) in a direction orthogonal to the axial direction of the clamp shaft (200) are different from each other, and the rotational opening (420) has a left-right length (L1) and an up-down length (L2) corresponding to those of the rotational ball (432).

5. The lens clamping device of claim 3, wherein the rotational ball (432) has a hexahedral shape, wherein a curvature (R1) of an upper surface (432a) of the rotational ball (432) in a rotation direction of the clamp shaft (200) is different from a curvature (R2) of a side surface (432b) of the rotational ball (432) in the rotation direction of the clamp shaft (200), and wherein curvatures (r1, r2) of an upper surface and a side surface of the rotational opening (420) in the rotation direction of the clamp shaft (200) correspond to the curvatures (R1, R2) of the upper surface and the side surface of the rotational ball (432) in the rotation direction of the clamp shaft (200), respectively.

6. The lens clamping device of claim 3, wherein a curvature (r3) of the rotational opening (420) in the axial direction of the clamp shaft (200) is greater than a curvature (R3) of the rotational ball (432) in the axial direction of the clamp shaft (200).

7. The lens clamping device of claim 3, further comprising a gap maintaining unit (460) mounted between the shaft block (410) and the clamp head frame (310) and formed to have elasticity to maintain a gap between the shaft block (410) and the clamp head frame (310).

8. The lens clamping device of claim 7, wherein the gap maintaining unit (460) comprises:
a gap maintaining base (462) fitted into and fixed to a pressing groove (461) of the shaft block (410); and
a gap maintaining elastic part (463) elastically supporting the clamp head frame (310)
